# EUROPEAN PATENT APPLICATION

(11) **EP 4 790 772 A1**
(43) Date of publication of application: **12.08.2026**
(21) Application number: 26152530.7
(22) Date of filing: 19.01.2026
(51) Int. Cl.: H01M 8/04313, H01M 8/0432, H01M 8/04537, H01M 8/04858, H01M 8/249, H01M 16/00

(54) **FUEL CELL POWER GENERATOR**

(30) Priority: 10.02.2025 JP 2025020044
(71) Applicant: KABUSHIKI KAISHA TOYOTA JIDOSHOKKI, Kariya-shi, Aichi 448-8671 (JP)
(72) Inventor: YOSHIDA, Satoshi, Kariya-shi, Aichi, 448-8671 (JP)
(74) Representative: TBK

(57) **Abstract**

A fuel cell power generator (FU) includes at least one of fuel cell modules (30) having a fuel cell stack (31) from which power is supplied to a load (91) and a fuel cell controller (60) configured to control power generation by the fuel cell stack (31). The at least one of the fuel cell modules (30) is used for a co-generation system (10) that recovers waste heat from the fuel cell stack (31). The fuel cell controller (60) causes the fuel cell stack (31) to perform inefficient power generation in response to a heat output request from a power generator controller (21) in the co-generation system (10).

## Description

### BACKGROUND ART

The present invention relates to a fuel cell power generator.

As disclosed in Japanese Patent Application Publication No. 2009-129596, there is an optimum temperature range for power generation in a fuel cell stack. In a case where the fuel cell stack starts the power generation in an environment where a temperature of the fuel cell stack is lower than the optimum temperature range for the power generation, the fuel cell stack is operated at low efficiency to warm up.

It has been desired to recover and utilize waste heat from the fuel cell stack.

### SUMMARY

In accordance with an aspect of the present invention, there is provided a fuel cell power generator including at least one of fuel cell modules having a fuel cell stack from which power is supplied to a load and a fuel cell controller configured to control power generation by the fuel cell stack. The at least one of the fuel cell modules is used for a co-generation system that recovers waste heat from the fuel cell stack. The fuel cell controller causes the fuel cell stack to perform inefficient power generation in response to a heat output request from a power generator controller in the co-generation system.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a schematic diagram illustrating a co-generation system;
FIG. 2 is a schematic diagram illustrating a fuel cell module;
FIG. 3 is a flowchart showing power generation control by a fuel cell controller according to an embodiment; and
FIG. 4 is a flowchart showing power generation control by a fuel cell controller according to a modified example.

### DETAILED DESCRIPTION OF THE EMBODIMENTS

The following will describe an embodiment of a fuel cell power generator.

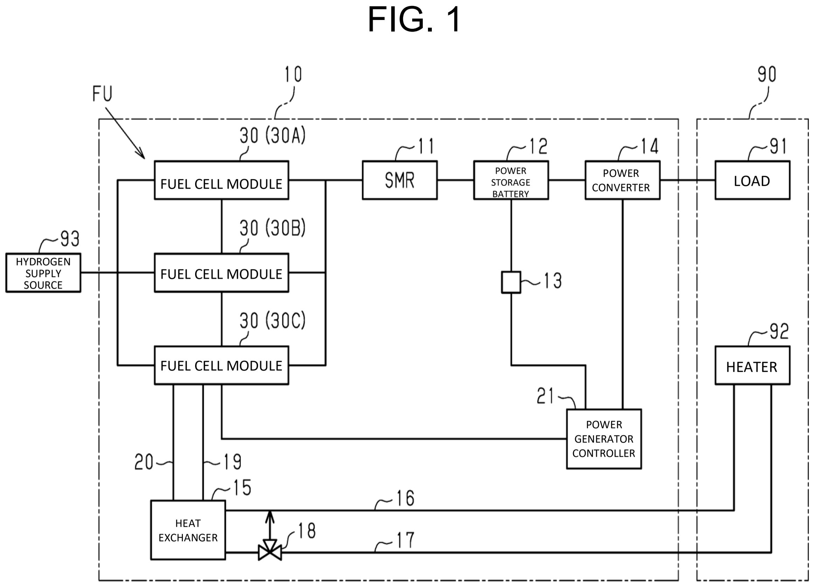

As illustrated in FIG. 1, a co-generation system 10 supplies electric power and heat to a building 90. The building 90 is used as a residential building, a public facility, or a commercial facility, for example. The building 90 includes a load 91 and a heater 92, which are driven by power. The heater 92 heats the inside of the building 90 with a heated first refrigerant. Examples of the heater 92 include a radiator and a heating panel.

The co-generation system 10 includes a fuel cell power generator FU. The fuel cell power generator FU includes at least one fuel cell module 30. The co-generation system 10 of the present embodiment includes a plurality of the fuel cell modules 30. As an example, the following will describe a case where there are three fuel cell modules 30; however, the number of the fuel cell modules 30 may be set as desired. The three fuel cell modules 30 output electric power. The three fuel cell modules 30 are a first fuel cell module 30A, a second fuel cell module 30B, and a third fuel cell module 30C.

The co-generation system 10 includes a system main relay 11. The plurality of the fuel cell modules 30 is connected to the system main relay 11.

The co-generation system 10 includes a power storage battery 12. The power storage battery 12 is connected to the fuel cell modules 30 through the system main relay 11. When the system main relay 11 is closed, power is supplied from the fuel cell modules 30 to the load 91 and the power storage battery 12. Thus, the plurality of the fuel cell modules 30 is connected so that power is supplied from each of the fuel cell modules 30 to the load 91.

The power storage battery 12 is capable of discharging and charging. Examples of the power storage battery 12 include a secondary battery and a capacitor. The power storage battery 12 is connected to the load 91. When total output power supplied from the fuel cell modules 30 is greater than consumption power of the load 91, the power storage battery 12 is charged with its surplus power. When total output power supplied from the fuel cell module 30 is less than the consumption power of the load 91, the power storage battery 12 supplies power to the load 91, in addition to the fuel cell module 30.

The co-generation system 10 includes a monitoring unit 13. The monitoring unit 13 monitors a state of the power storage battery 12. The state of the power storage battery 12 includes a state of charge (SOC) of the power storage battery 12. For example, the monitoring unit 13 calculates the SOC from current or voltage of the power storage battery 12. Examples of the monitoring unit 13 include a battery management system.

The co-generation system 10 includes a power converter 14. The power converter 14 converts power output from the fuel cell modules 30 and the power storage battery 12, and outputs the converted power to the load 91. The power converter 14 includes, for example, a DC/DC converter that changes a voltage level and an inverter that converts DC power to AC power.

The co-generation system 10 includes a heat exchanger 15, a first pipe 16, a second pipe 17, and a three-way valve 18. The heat exchanger 15 and the heater 92 are connected to each other through the first pipe 16. The heat exchanger 15 and the heater 92 are connected to each other also through the second pipe 17. The first refrigerant circulates through a circulation passage formed of the heater 92, the heat exchanger 15, the first pipe 16, and the second pipe 17. The first refrigerant is, for example, cooling water.

The heat exchanger 15 recovers waste heat from the fuel cell modules 30 to increase a temperature of the first refrigerant. The first refrigerant with the temperature increased in the heat exchanger 15 is supplied to the heater 92 through the first pipe 16. In the heater 92, heat exchange occurs between the first refrigerant supplied from the first pipe 16 and air inside the building 90, thereby heating the building 90. The first refrigerant with the temperature decreased by the heat exchange in the heater 92 is supplied to the heat exchanger 15 through the second pipe 17. The temperature of the first refrigerant flowing through the second pipe 17 is lower than that of the first refrigerant flowing through the first pipe 16.

The three-way valve 18 is provided in the second pipe 17. The three-way valve 18 allows the first refrigerant flowing through the second pipe 17 to flow into the first pipe 16 without passing through the heat exchanger 15. For example, the three-way valve 18 distributes the first refrigerant flowing through the second pipe 17 to the heat exchanger 15 and the first pipe 16 depending on its opening degree. In other words, the three-way valve 18 adjusts a flow rate of the first refrigerant flowing from the second pipe 17 to the heat exchanger 15. Thus, the temperature of the first refrigerant that is supplied to the heater 92 is adjusted by adjusting a ratio of the first refrigerant flowing through the heat exchanger 15 to be heated by the waste heat to the first refrigerant flowing into the first pipe 16 without passing through the heat exchanger 15.

The co-generation system 10 includes a plurality of third pipes 19 and a plurality of fourth pipes 20. The fuel cell modules 30 and the heat exchanger 15 are connected to each other through the third pipes 19. A second refrigerant with a temperature increased by heat generated in each of the fuel cell modules 30 flows through the corresponding one of the third pipes 19. The second refrigerant is, for example, antifreeze liquid. The second refrigerant flowing through each of the third pipes 19 is supplied to the heat exchanger 15. The second refrigerant supplied to the heat exchanger 15 is cooled by heat exchange between the second refrigerant and the first refrigerant. On the contrary, the first refrigerant is heated due to the heat exchange. Thus, the waste heat from the plurality of the fuel cell modules 30 is recovered. The second refrigerant after the heat exchange in the heat exchanger 15 is returned to the corresponding one of the fuel cell modules 30 through each of the fourth pipes 20.

For convenience of illustration, only one of the third pipes 19 and only one of the fourth pipes 20 each connecting the third fuel cell module 30C and the heat exchanger 15 are illustrated; however the co-generation system 10 includes the third pipes 19 and the fourth pipes 20 each connecting a corresponding one of the fuel cell modules 30 and the heat exchanger 15. In addition, only one heat exchanger 15 may be provided in the co-generation system 10, or a plurality of the heat exchangers 15 may be each provided for a corresponding one of the fuel cell modules 30 in the co-generation system 10. When each of the heat exchangers 15 is provided for the corresponding one of the fuel cell modules 30, the co-generation system 10 has the first pipes 16 and the second pipes 17 each corresponding to the heat exchanger 15.

The co-generation system 10 includes a power generator controller 21. The power generator controller 21 is, for example, a computer including a processor and a data storage unit. The processor is, for example, a central processing unit (CPU), a graphics processing unit (GPU), or a digital signal processor (DSP). The data storage unit includes a random access memory (RAM) and a read only memory (ROM). The data storage unit stores program codes or commands configured to cause the processor to execute processes. The data storage unit, that is, a computer readable medium, includes any available medium that is accessible by a general purpose computer or a dedicated computer. The power generator controller 21 may include a hardware circuit such as an ASIC (Application Specific Integrated Circuit) or an FPGA (Field Programmable Gate Array). The power generator controller 21, which is a processing circuit, may include one or more processors that operate according to a computer program, one or more hardware circuits such as ASICs or FPGAs, or a combination thereof.

The power generator controller 21 controls the co-generation system 10. The power generator controller 21 obtains information indicating the SOC of the power storage battery 12 from the monitoring unit 13. The power generator controller 21 controls the power converter 14. The power generator controller 21 adjusts the opening degree of the three-way valve 18. The power generator controller 21 sends commands to the fuel cell modules 30, thereby controlling them.

### <Fuel cell module>

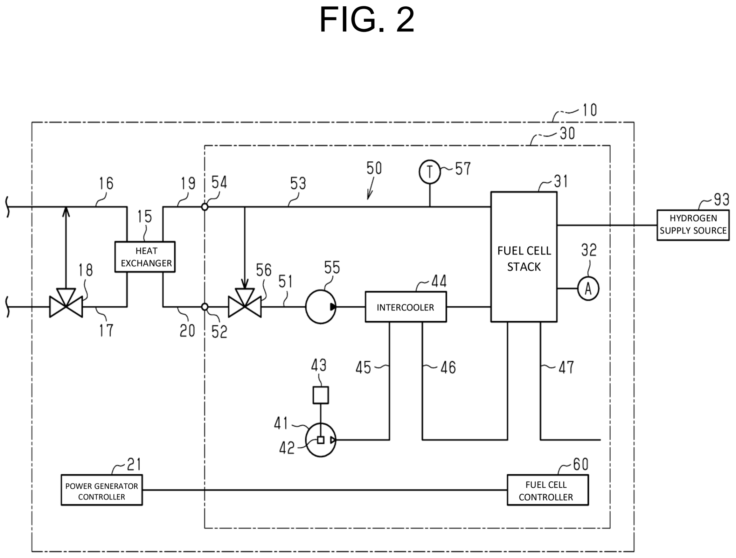

The following will focus on one of the three fuel cell modules 30 as appropriate. As illustrated in FIG. 2, the fuel cell module 30 includes a fuel cell stack 31. The fuel cell stack 31 includes a plurality of fuel cells. Each of the fuel cells is, for example, a polymer electrolyte fuel cell. The fuel cell stack 31 generates power by a chemical reaction between anode gas and cathode gas. The anode gas is, for example, hydrogen. The cathode gas is, for example, oxygen in the air. A hydrogen supply source 93 is connected to the fuel cell stack 31. The hydrogen supply source 93 is, for example, a cylinder cradle. The hydrogen supply source 93 supplies hydrogen as the anode gas to the fuel cell stack 31.

The fuel cell module 30 includes a current sensor 32. The current sensor 32 detects current output from the fuel cell stack 31. The current output from the fuel cell stack 31 is generated by power generation in the fuel cell stack 31.

The fuel cell module 30 includes an electric compressor 41 and an inverter 43. The electric compressor 41 includes an electric motor 42. The electric compressor 41 is driven by the electric motor 42. The electric compressor 41 supplies air to the fuel cell stack 31. More specifically, the electric compressor 41 intakes and compresses air, and then, supplies the compressed air to the fuel cell stack 31. The inverter 43 converts DC power to AC power and supplies the AC power to the electric motor 42. This drives the electric motor 42.

The fuel cell module 30 includes an intercooler 44, a first supply passage 45 through which the electric compressor 41 is connected to the intercooler 44, and a second supply passage 46 through which the intercooler 44 is connected to the fuel cell stack 31. The air discharged from the electric compressor 41 is supplied to the intercooler 44 through the first supply passage 45. The intercooler 44 cools the air supplied from the electric compressor 41. The air cooled by the intercooler 44 is supplied to the fuel cell stack 31 through the second supply passage 46 .

The fuel cell module 30 includes a discharge passage 47. The discharge passage 47 is a passage through which gas discharged from the fuel cell stack 31 flows. The gas is air including product water. The product water is water produced by the power generation in the fuel cell stack 31.

The fuel cell module 30 includes a cooling system 50. The cooling system 50 includes a first cooling passage 51 and a second cooling passage 53. The first cooling passage 51 includes a first connecting portion 52 that is connected to the fourth pipe 20. The second cooling passage 53 includes a second connecting portion 54 that is connected to the third pipe 19. Thus, the first cooling passage 51, the second cooling passage 53, the third pipe 19, the fourth pipe 20, and the heat exchanger 15 cooperate to form a circulation passage. The second refrigerant circulates through this circulation passage. The intercooler 44 is connected to the first cooling passage 51. In the intercooler 44, heat exchange occurs between the second refrigerant flowing through the first cooling passage 51 and the air supplied from the electric compressor 41.

The cooling system 50 includes a pump 55. The pump 55 is provided in the first cooling passage 51. The pump 55 discharges the second refrigerant toward the fuel cell stack 31. As a result, the second refrigerant is supplied to the fuel cell stack 31 through the first cooling passage 51. Heat exchange occurs between the second refrigerant supplied to the fuel cell stack 31 and the fuel cell stack 31. The fuel cell stack 31 is cooled due to the heat exchange. The second refrigerant after cooling the fuel cell stack 31 is supplied to the heat exchanger 15 through the second cooling passage 53.

The cooling system 50 includes a three-way valve 56. The three-way valve 56 is provided in the first cooling passage 51. The three-way valve 56 allows the second refrigerant flowing through the second cooling passage 53 to flow into the first cooling passage 51 without passing through the heat exchanger 15. For example, the three-way valve 56 distributes the second refrigerant flowing through the second cooling passage 53 to the heat exchanger 15 and the first cooling passage 51 depending on its opening degree. In other words, the three-way valve 56 adjusts a flow rate of the second refrigerant flowing from the second cooling passage 53 to the heat exchanger 15. Thus, the three-way valve 56 adjusts a ratio of the second refrigerant flowing through the heat exchanger 15 to be cooled to the second refrigerant flowing into the first cooling passage 51 without passing through the heat exchanger 15.

The cooling system 50 includes a temperature sensor 57. The temperature sensor 57 detects a temperature of the second refrigerant. The temperature sensor 57 is provided in the second cooling passage 53. Accordingly, the temperature of the second refrigerant detected by the temperature sensor 57 is a temperature of the second refrigerant after the heat exchange occurs between the second refrigerant and the fuel cell stack 31.

The fuel cell module 30 includes a fuel cell controller 60. A hardware configuration of the fuel cell controller 60 is, for example, the same as the hardware configuration of the power generator controller 21. The fuel cell controller 60 obtains a value of current, which is output from the fuel cell stack 31, based on the current sensor 32. The fuel cell controller 60 obtains the temperature of the second refrigerant from the temperature sensor 57. The fuel cell controller 60 is configured to be communicable with the power generator controller 21. In the present embodiment, the fuel cell controller 60 of each of the fuel cell modules 30 is configured to be communicable with the power generator controller 21. The fuel cell controller 60 controls the fuel cell module 30 in accordance with commands from the power generator controller 21.

The power generator controller 21 is configured to output a command indicating power generation demand to the fuel cell controller 60 of each of the fuel cell modules 30. For example, the power generator controller 21 calculates the power generation demand based on power demand of the load 91. The power generator controller 21 generates the command indicating the power generation demand such that a total output power from the plurality of the fuel cell modules 30 satisfies the power demand of the load 91. The power generation demand may differ for each of the fuel cell modules 30.

The power generator controller 21 may generate the command indicating the power generation demand such that the power demand of the load 91 is satisfied before the SOC of the power storage battery 12 falls below a predetermined range. When the SOC of the power storage battery 12 falls below the predetermined range, the power generator controller 21 generates a command indicating power generation demand to increase power generated by the fuel cell stack 31 to a predetermined power and to cause the fuel cell stack 31 to generate the predetermined power. The predetermined power is set so that the total output power of the plurality of the fuel cell modules 30 is larger than the power demand of the load 91. That is, the power generator controller 21 calculates the power generation demand such that the load 91 is driven by the power generated by the fuel cell stack 31 and the power storage battery 12 is charged with its surplus power. The predetermined range of the SOC may be set as desired. The predetermined range of the SOC only needs to be set so that the SOC does not decrease excessively.

The power generator controller 21 is configured to output a command indicating a heat output request to the fuel cell controller 60. For example, the power generator controller 21 outputs the command indicating the heat output request such that a temperature of the heater 92 or the building 90 reaches a target temperature. The target temperature may be set in advance, or may be set as desired by an occupant of the building 90. The power generator controller 21 outputs a command indicating heat demand as well as the command indicating the heat output request. The heat demand is an amount of heat to be generated by the fuel cell stack 31. The heat demand is calculated so that the temperature of the heater 92 or the building 90 reaches the target temperature due to the amount of heat generated by the fuel cell stack 31. For example, the heat demand may be calculated based on heat exchange efficiency or the like in the heat exchanger 15. The power generator controller 21 calculates the heat demand such that a total amount of heat generated by the fuel cell stacks 31 of the fuel cell modules 30 allows the temperature of the heater 92 or the building 90 to reach the target temperature. The heat demand may differ for each of the fuel cell modules 30. The command indicating the heat output request does not need to be output based on the target temperature, and may be output solely based on whether the heat output request is necessary or not.

### <Power generation control performed by fuel cell controller>

The following will describe power generation control performed by the fuel cell controller 60. The power generation control is repeatedly executed at predetermined intervals.

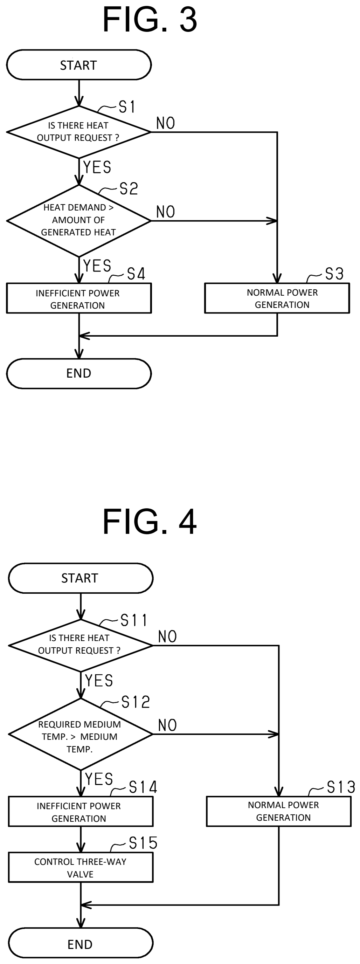

As shown in FIG. 3, the fuel cell controller 60 determines whether the fuel cell controller 60 has received the command indicating the heat output request from the power generator controller 21. When a determination result in Step S1 is positive (YES in Step S1), the fuel cell controller 60 proceeds to Step S2. When the determination result in Step S1 is negative (NO in Step S1), the fuel cell controller 60 proceeds to Step S3.

In Step S2, the fuel cell controller 60 determines whether the heat demand is larger than the amount of heat generated by the fuel cell stack 31. The amount of heat generated by the fuel cell stack 31 may be calculated based on output current from the fuel cell stack 31, which is obtained from the current sensor 32. An ideal amount of power generated by the fuel cell stack 31 is obtained based on a current-voltage characteristic of the fuel cell stack 31. An actual amount of power generated by the fuel cell stack 31 is calculated based on the output current of the fuel cell stack 31, which is obtained from the current sensor 32, and the current-voltage characteristic of the fuel cell stack 31. The fuel cell controller 60 subtracts the actual amount of power generated by the fuel cell stack 31 from the ideal amount of power generated by the fuel cell stack 31. The value obtained in this way represents the amount of heat converted from power in the fuel cell stack 31. The fuel cell controller 60 compares the calculated amount of heat with the heat demand to determine whether the heat demand is larger than the amount of heat generated by the fuel cell stack 31. When a determination result in Step S2 is negative (NO in Step S2), the fuel cell controller 60 proceeds to Step S3. When the determination result in Step S2 is positive (YES in Step S2), the fuel cell controller 60 proceeds to Step S4.

In step S3, the fuel cell controller 60 causes the fuel cell stack 31 to perform normal power generation. The normal power generation is power generation at a normal operating point according to the power generation demand while the heat generated by the fuel cell module 30 is suppressed. An operating point is generally determined based on the current-voltage characteristics of the fuel cell stack 31. The output voltage and the output current of the fuel cell stack 31 are determined by the operating point. The fuel cell controller 60 controls the electric compressor 41 so as to cause the power generation at the normal operating point.

In the present embodiment, the power generator controller 21 calculates the power generation demand based on the SOC of the power storage battery 12. The fuel cell controller 60 causes the fuel cell stack 31 to generate power in accordance with the calculated power generation demand, that is, controls power generated by the fuel cell stack 31 in accordance with the power demand of the load 91 before the SOC of the power storage battery 12 falls below the predetermined range. When the SOC of the power storage battery 12 falls below the predetermined range, the fuel cell controller 60 increases the power generated by the fuel cell stack 31 to the predetermined power and causes the fuel cell stack 31 to generate the predetermined power.

In Step S4, the fuel cell controller 60 causes the fuel cell stack 31 to perform inefficient power generation. The inefficient power generation is power generation in which the amount of heat generated by the fuel cell stack 31 is greater than that in the normal power generation. That is, the inefficient power generation is more inefficient than the normal power generation. Efficiency in power generation is generally expressed as an amount of generated power relative to an amount of consumption of hydrogen. The fuel cell controller 60 determines a warm-up operating point at which the amount of heat generated by the fuel cell stack 31 satisfies the heat demand, based on a difference between the heat demand and the amount of heat generated by the fuel cell stack 31. The warm-up operating point is determined so as to satisfy both the power generation demand and the heat demand. For example, under the same power generation demand, the warm-up operating point is determined as the operating point on the same output power curve as that on which the normal operating point is located and at a lower voltage.

The fuel cell controller 60 controls the electric compressor 41 so that the power generation at the warm-up operating point is performed. Air supply at the warm-up operating point is limited compared to air supply at the normal operating point. More specifically, an air-stoichiometric ratio is limited. The air-stoichiometric ratio is a ratio of an actual amount of air supply to an ideal amount of air supply. Here, the amount of air supply is necessary for the power generation by the fuel cell stack 31. The amount of heat generated by the fuel cell stack 31 is increased by limiting the air-stoichiometric ratio. The fuel cell controller 60 only needs to calculate the amount of air supply for causing the fuel cell stack 31 to generate power at the warm-up operating point and control the electric compressor 41 so that the amount of air supply is supplied to the fuel cell stack 31.

### [Operation of the present embodiment]

The co-generation system 10 recovers the waste heat from the fuel cell stack 31 and utilizes the recovered waste heat for the heater 92. The power generator controller 21 is configured to output the command indicating the power generation demand and the command indicating the heat output request to the fuel cell controller 60. As a result, when heating by the heater 92 is necessary, the amount of heat generated by the fuel cell modules 30 is adjusted, thereby performing heating using the waste heat from the fuel cell modules 30.

### [Advantageous effects of the present embodiment]

The fuel cell controller 60 causes the fuel cell stack 31 to perform the inefficient power generation in response to the heat output request from the power generator controller 21. The amount of heat of the fuel cell stack 31 is increased by the inefficient power generation. As a result, since the amount of heat required for the co-generation system 10 is output, the fuel cell modules 30 are usable for the co-generation system 10.

In a case where the heat demand is greater than the total amount of heat generated by the fuel cell modules 30, the fuel cell controller 60 causes the fuel cell stack 31 of each of the fuel cell modules 30 to perform the inefficient power generation. In a case where the heat demand is equal to or less than the total amount of heat generated by the fuel cell modules 30, the heat demand is satisfied. It is suppressed that efficiency in the power generation by the fuel cell stack 31 is reduced by causing the fuel cell stack 31 to perform the inefficient power generation only in the case where the inefficient power generation is necessary.

The fuel cell controller 60 controls power generated by the fuel cell stack 31 in accordance with the power demand of the load 91 before the SOC of the power storage battery 12 falls below the predetermined range. When the SOC of the power storage battery 12 falls below the predetermined range, the fuel cell controller 60 increases the power generated by the fuel cell stack 31 to the predetermined power and causes the fuel cell stack 31 to generate the predetermined power. As a result, the power storage battery 12 may be charged so that the SOC of the power storage battery 12 does not fall below the predetermined range. In addition, the fuel cell stack 31 is less likely to deteriorate as fluctuation in the power generated by the fuel cell stack 31 decreases. Therefore, deterioration of the fuel cell stack 31 is suppressed by causing the fuel cell stack 31 to generate the predetermined power.

### [Modified examples]

The present embodiment may be modified as follows. The present embodiment and the following modified examples may be combined with each other as long as they do not technically contradict each other.

The power generator controller 21 may output a command indicating a required medium temperature as well as the command indicating the heat output request. The required medium temperature is a required target temperature of the second medium. The required medium temperature is calculated so that the temperature of the heater 92 or the building 90 reaches a target temperature due to the amount of heat generated by the fuel cell stack 31. In this case, the fuel cell controller 60 performs power generation control as follows.

As illustrated in FIG. 4, in Step S11, the fuel cell controller 60 determines whether the fuel cell controller 60 has received the command indicating the heat output request from the power generator controller 21. When a determination result in Step S11 is positive (YES in Step S11), the fuel cell controller 60 proceeds to Step S12. When the determination result in Step S11 is negative (NO in Step S11), the fuel cell controller 60 proceeds to Step S13.

In Step S12, the fuel cell controller 60 determines whether the required medium temperature is higher than a medium temperature. The medium temperature is a temperature of the second refrigerant. The temperature of the second refrigerant is obtained from the temperature sensor 57. When a determination result in Step S12 is negative (NO in Step S12), the fuel cell controller 60 proceeds to Step S13. If the determination result in Step S12 is positive (YES in Step S12), the fuel cell controller 60 proceeds to Step S14.

In Step S13, the fuel cell controller 60 causes the fuel cell stack 31 to perform the normal power generation. The process in Step S13 is the same as the process in Step S3.

In Step S14, the fuel cell controller 60 causes the fuel cell stack 31 to perform the inefficient power generation. The process in Step S14 is the same as the process in Step S4. After completing the process in Step S14, the fuel cell controller 60 proceeds to Step S15.

In Step S15, the fuel cell controller 60 adjusts the temperature of the second refrigerant by controlling the three-way valve 56. For example, the fuel cell controller 60 reduces the flow rate of the second refrigerant flowing into the heat exchanger 15 to increase the temperature of the second refrigerant.

A temperature of the heater 92 is adjusted by adjusting the temperature of the second refrigerant as described above.

The power generator controller 21 may generate the command indicating the power generation demand such that the SOC of the power storage battery 12 is within the predetermined range. The predetermined range is, for example, the same range as that in the embodiment.

The fuel cell controller 60 controls the power generated by the fuel cell stack 31 in accordance with the command indicating the power generation demand. Thus, the fuel cell controller 60 may control the power generated by the fuel cell stack 31 so that the SOC of the power storage battery 12 is within the predetermined range.

This allows the SOC of the power storage battery 12 to be kept within the predetermined range, thereby preventing the SOC of the power storage battery 12 from becoming insufficient.

The plurality of the fuel cell modules 30 may include a primary fuel cell module and a secondary fuel cell module. The primary fuel cell module is a fuel cell module that provides a command to the secondary fuel cell module. The following will describe a case where the first fuel cell module 30A serves as the primary fuel cell module, the second fuel cell module 30B and the third fuel cell module 30C serve as the secondary fuel cell modules, as an example.

The fuel cell controller 60 of the first fuel cell module 30A is configured to be communicable with the power generator controller 21. The fuel cell controller 60 of the first fuel cell module 30A serves as the primary fuel cell module based on its ability to communicate with the power generator controller 21. The fuel cell controllers 60 of the second fuel cell module 30B and the third fuel cell module 30C are configured to be communicable with the fuel cell controller 60 of the first fuel cell module 30A. The fuel cell controllers 60 of the second fuel cell module 30B and the third fuel cell module 30C may be or need not be communicable with the power generator controller 21.

The power generator controller 21 outputs the command indicating the power generation demand to the fuel cell controller 60 of the first fuel cell module 30A. The power generation demand represents a target value for a total output power output from the three fuel cell modules 30. That is, the power generation demand represents a target value for the output power from the fuel cell power generator FU.

The fuel cell controller 60 mounted on the first fuel cell module 30A calculates the power generated by each of the fuel cell modules 30 so that the total output power from the three fuel cell modules 30 satisfies the power generation demand. The generated power may differ for each of the fuel cell modules 30. The fuel cell controller 60 of the first fuel cell module 30A sends the commands each indicating the generated power to the fuel cell controllers 60 of the second fuel cell module 30B and the third fuel cell module 30C. The fuel cell controller 60 of each of the fuel cell modules 30 causes the fuel cell stack 31 to generate power in accordance with the generated power indicated by the corresponding command.

The power generator controller 21 outputs the command indicating the heat demand to the fuel cell controller 60 of the first fuel cell module 30A. The heat demand is a target value for the total amount of heat generated by the three fuel cell modules 30. That is, the heat demand is a target value for the amount of heat generated by the fuel cell power generator FU.

The fuel cell controller 60 mounted on the first fuel cell module 30A calculates the amount of heat generated by each of the fuel cell modules 30 so that the total amount of heat generated by the three fuel cell modules 30 satisfies the heat demand. The amount of heat generated may differ for each of the fuel cell modules 30. The fuel cell controller 60 of the first fuel cell module 30A sends the commands each indicating the amount of heat generated to the fuel cell controllers 60 of the second fuel cell module 30B and the third fuel cell module 30C.

Here, the fuel cell controller 60 mounted on the first fuel cell module 30A may determine which of the three fuel cell modules 30 performs the normal power generation and which of the three fuel cell modules 30 performs the inefficient power generation. As a result, the fuel cell controller 60 of the first fuel cell module 30A sends the command to at least one of the other fuel cell modules 30B and 30C to cause the at least one of the other fuel cell modules 30B and 30C to perform the inefficient power generation. In this case, the fuel cell controller 60 of the first fuel cell module 30A may suppress uneven deterioration among the fuel cell modules 30 in the fuel cell power generator FU by changing the fuel cell modules 30 that perform the inefficient power generation.

The fuel cell controller 60 mounted on the first fuel cell module 30A may control the fuel cell modules 30 so that at least one of the fuel cell modules 30 performs the normal power generation. For example, the fuel cell controller 60 of the first fuel cell module 30A may send the command to at least one of the other fuel cell modules 30B and 30C to cause the at least one of the other fuel cell modules 30B and 30C to perform the normal power generation, which is more efficient than the inefficient power generation. In this case, the at least one of the fuel cell modules 30 may generate power more efficiently than in the inefficient power generation. This reduces consumption of hydrogen.

The fuel cell controller 60 may cause the fuel cell stack 31 to perform the inefficient power generation when the temperature of the fuel cell stack 31 is increased to a temperature suitable for the power generation, such as when the power generation starts below freezing temperatures. In this case, the fuel cell controller 60 may control the three-way valve 56 to prevent the second refrigerant from flowing into the heat exchanger 15.

The fuel cell module 30 includes a bypass passage through which the second supply passage 46 is connected to the discharge passage 47. In this case, a bypass valve is provided in the bypass passage. Air flows through the bypass passage depending on an opening degree of the bypass valve. That is, a ratio of the air supplied to the fuel cell stack 31 to the air flowing through the bypass passage may be adjusted depending on the opening degree of the bypass valve.

In the case where the fuel cell module 30 includes the bypass passage and the bypass valve as described above, the fuel cell controller 60 may limit an amount of air supply by adjusting the opening degree of the bypass valve when causing the fuel cell stack 31 to generate power at the warm-up operating point.

The co-generation system 10 need not include the power storage battery 12. In this case, the power generator controller 21 may generate the command indicating the power generation demand in accordance with the power demand of the load 91.

The fuel cell module 30 need not include the three-way valve 56.

## Claims

1. A fuel cell power generator (FU) comprising
at least one of fuel cell modules (30) having:
a fuel cell stack (31) from which power is supplied to a load (91); and
a fuel cell controller (60) configured to control power generation by the fuel cell stack (31),
the at least one of the fuel cell modules (30) being used for a co-generation system (10) that recovers waste heat from the fuel cell stack (31), **characterized in that**
the fuel cell controller (60) causes the fuel cell stack (31) to perform inefficient power generation in response to a heat output request from a power generator controller (21) in the co-generation system (10).

2. The fuel cell power generator (FU) according to claim 1, **characterized in that**
the fuel cell controller (60) calculates an amount of heat generated by the fuel cell stack (31) in response to the heat output request, and
the fuel cell controller (60) causes the fuel cell stack (31) to perform the inefficient power generation when a heat demand required together with the heat output request is larger than the amount of heat generated by the fuel cell stack (31).

3. The fuel cell power generator (FU) according to claim 1, **characterized in that**
the co-generation system (10) includes a power storage battery (12) connected to the load (91),
before a state of charge of the power storage battery (12) falls below a predetermined range, the fuel cell controller (60) controls power generated by the fuel cell stack (31) in accordance with power demand of the load (91), and
when the state of charge of the power storage battery (12) falls below the predetermined range, the fuel cell controller (60) increases the power generated by the fuel cell stack (31) to a predetermined power and causes the fuel cell stack (31) to generate the predetermined power.

4. The fuel cell power generator (FU) according to claim 1, **characterized in that**
the co-generation system (10) includes a power storage battery (12) connected to the load (91), and
the fuel cell controller (60) controls power generated by the fuel cell stack (31) so that a state of charge of the power storage battery (12) is within a predetermined range.

5. The fuel cell power generator (FU) according to claim 1, **characterized in that**
the at least one of the fuel cell modules (30) includes a plurality of the fuel cell modules (30),
each of the plurality of the fuel cell modules (30) is connected to the load (91) so that the power is supplied from the fuel cell module (30) to the load (91), and is used for the co-generation system (10) that recovers the waste heat from the fuel cell stack (31) of the fuel cell module (30), and
the fuel cell controller (60) mounted on one of the fuel cell modules (30) sends a command to the fuel cell controller (60) mounted on at least one of the other fuel cell modules (30) and causes the at least one of the other fuel cell modules to perform the inefficient power generation.

6. The fuel cell power generator (FU) according to claim 1, **characterized in that**
the at least one of the fuel cell modules (30) includes a plurality of the fuel cell modules (30),
each of the plurality of the fuel cell modules (30) is connected to the load (91) so that the power is supplied from the fuel cell module (30) to the load (91), and is used for the co-generation system (10) that recovers the waste heat from the fuel cell stack (31) of the fuel cell module (30), and
the fuel cell controller (60) mounted on one of the fuel cell modules (30) sends a command to the fuel cell controller (60) mounted on at least one of the other fuel cell modules (30) and causes the at least one of the other fuel cell modules (30) to perform normal power generation more efficient than the inefficient power generation.
